**Europäisches Patentamt**

**European Patent Office**

**Office européen des brevets**

(19)

(11) **EP 1 197 895 A2**

(12) **EUROPEAN PATENT APPLICATION**

(43) Date of publication:
**17.04.2002 Bulletin 2002/16**

(51) Int Cl.⁷: **G06F 17/60**

(21) Application number: **01123336.8**

(22) Date of filing: **09.10.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **10.10.2000 JP 2000309096**<br> **23.10.2000 JP 2000322362**<br><br>(71) Applicant: **Ricoh Company, Ltd.**<br>**Tokyo 143-8555 (JP)**<br><br>(72) Inventors:<br> • **Ehara, Mikinori**<br> **Yokohama-shi, Kanagawa 240-0023 (JP)** | • **Noritake, Yuji**<br> **Yokohama-shi, Kanagawa 240-0051 (JP)**<br> • **Abe, Tsutomu**<br> **Hodogaya-ku, Yokohama-shi 240-0013 (JP)**<br> • **Urata, Teru**<br> **Setagaya-ku, Tokyo 257-0077 (JP)**<br> • **Nakamura, Nobuaki**<br> **Nagoya-shi, Aichi 468-0015 (JP)**<br><br>(74) Representative: **Schwabe - Sandmair - Marx**<br>**Stuntzstrasse 16**<br>**81677 München (DE)** |

(54) **Method and system for calculating environmental impacts of products**

(57) An environmental impact calculation system comprises a plurality of measuring instruments (10 to 21), a plurality of flowmeters (9a to 9d) and a production management system (22). The measuring instruments measure environmental impacts of products that are produced in a manufacturing process. The flowmeters specify a proportional distribution parameter for propor-
tionally distributing environmental impacts associated with plural types of products that have been measured by the measuring instruments to environmental impacts associated with PCB products. The production management system specifies a distribution parameter for distributing the proportionally distributed environmental impacts to one product.

FIG. 17

| ENVIRONMENTAL IMPACTS OF PRODUCTS IN MAINTENANCE PROCESS | |
|---|---|
| AMOUNT OF PARTS USED | ○○ |
| AMOUNT OF DISPOSED PARTS | ○○ |
| AMOUNT OF ELECTRIC ENERGY USED | ○○kwh |
| AMOUNT OF FUEL USED | ○○L |
| AMOUNT OF WASTES<br>(AMOUNT OF BURIED WASTES) | ○○kg |
| AMOUNT OF WASTES<br>(AMOUNT OF INCINERATED WASTES) | ○○kg |
| RECYCLABLE AMOUNT | ○○kg |
| AMOUNT OF EMISSIONS,<br>SUCH AS $CO_2$ $NO_x$ AND $SO_x$ | ○○g |
| ⋮ | ⋮ |

## Description

The present invention relates to a method and system for calculating environmental impacts of products, and, more particularly, to a method and system for calculating environmental impacts that are produced in a manufacturing process, a maintenance process and the like of one product.

To hand over the rich earth to the future generation, we have to face environmental problems and are paying attention to how company grapple with environmental safeguards. Therefore, each company is demanded of developing products in consideration of environments and is making a variety of efforts to reduce environmental impacts of products. The environmental impacts of products include not only environmental impacts that are produce in the manufacturing process of the products but also environmental impacts that are produce in the maintenance process of sold products. Each company therefore calculates the environmental impacts that are produce in each process and develop products that are deeply concerned with environmental problems in such a way as to decrease the calculated values.

It is however easy to calculate direct environmental impacts (environmental impacts associated only with a predetermined type of products), such as raw materials for use in the predetermined type of products or wastes, among the environmental impacts of products, but is difficult to calculate indirect environmental impacts (environmental impacts that are associated not only with a predetermined type of products but also with other products), such as equipments that keep conditions like temperature and pressure. It is not therefore possible to specify very reliable values for environmental impacts of products, thus making it difficult to judge if environmental impacts of products have really been reduced.

The present invention has been made to solve the aforementioned problems, and it is an object of the present invention to provide an environmental impact calculation method and system that can calculate very reliable values for environmental impacts of products.

To achieve the object, according to the first aspect of the invention, there is provided an environmental impact calculation method of calculating environmental impacts of one product from environmental impacts associated with a predetermined type of products, which is characterized by comprising:

a measuring procedure of measuring the environmental impacts associated with the predetermined type of products;
a classification procedure of classifying the environmental impacts measured in the measuring procedure into direct environmental impacts associated only with the predetermined type of products and indirect environmental impacts associated with plural types of products;

a proportional division procedure of proportionally distributing the indirect environmental impacts classified in the classification procedure to the environmental impacts associated with the predetermined type of products; and
a distribution procedure of distributing the direct environmental impacts and the indirect environmental impacts proportionally distributed in the proportional division procedure to the environmental impacts of one product.

It is preferable that the measuring procedure should measure environmental impacts which are produced in at least one of a manufacturing process and a maintenance process for the predetermined type of products.

It is preferable that the measuring procedure should measure the environmental impacts associated with the predetermined type of products by using measuring instruments corresponding to types of the environmental impacts.

It is preferable that the proportional division procedure should proportionally distribute the indirect environmental impacts to the environmental impacts associated with the predetermined type of products based on a predetermined parameter.

It is desirable that the indirect environmental impacts should be environmental impacts which are produced as a fluid is supplied to a plurality of manufacturing equipments, and that a flow ratio of the fluid is used as the predetermined parameter.

It is desirable that the distribution procedure should distribute the proportionally distributed indirect environmental impacts to the environmental impacts of one product based on a predetermined parameter according to a type of the one product.

It is preferable that the predetermined type of products should be printed circuit boards, and the ratio of the number of parts of the printed circuit boards should be used as the predetermined parameter.

It is preferable that the classification procedure should classify the environmental impacts measured in the measuring procedure into the direct environmental impacts and the indirect environmental impacts and register the direct environmental impacts and the indirect environmental impacts in a database, that the proportional division procedure should proportionally distribute the indirect environmental impacts to the environmental impacts associated with the predetermined type of products based on a first predetermined parameter registered in the database, and that the distribution procedure should distribute the direct environmental impacts and the indirect environmental impacts proportionally distributed in the proportional division procedure to the environmental impacts of one product based on a second predetermined parameter registered in the database.

According to the second aspect of the invention, there is provided an environmental impact calculation system for calculating environmental impacts of one product from environmental impacts associated with a predetermined type of products, which is characterized by comprising:

measuring means (10 to 21) for measuring the environmental impacts associated with the predetermined type of products;

classification means (31b) for classifying the environmental impacts measured by the measuring means (10 to 21) into direct environmental impacts associated only with the predetermined type of products and indirect environmental impacts associated with plural types of products;

proportional division means (7a to 7c, 9a to 9c, 31b) for proportionally distributing the indirect environmental impacts classified by the classification means (31b) to the environmental impacts associated with the predetermined type of products; and

distribution means (22, 31b) for distributing the direct environmental impacts and the indirect environmental impacts proportionally distributed by the proportional division means (7a to 7c, 9a to 9c, 31b) to the environmental impacts of one product.

It is preferable that the measuring means (10 to 21) should measure environmental impacts which are produced in at least one of a manufacturing process and a maintenance process for the predetermined type of products.

It is preferable that the measuring means (10 to 21) should be measuring instruments corresponding to types of the environmental impacts.

It is preferable that the proportional division means (7a to 7c, 9a to 9c, 31b) should proportionally distribute the indirect environmental impacts to the environmental impacts associated with the predetermined type of products based on a predetermined parameter.

It is desirable that the indirect environmental impacts should be environmental impacts which are produced as a fluid is supplied to a plurality of manufacturing equipments, and that the predetermined parameter should be a flow ratio of the fluid.

It is desirable that the distribution means (22, 31b) should distribute the proportionally distributed indirect environmental impacts to the environmental impacts of one product based on a predetermined parameter according to a type of the product.

It is desirable that the predetermined type of products should be printed circuit boards, and that the ratio of the number of parts of the printed circuit boards should be used as the predetermined parameter.

It is desirable that the classification means (31b) should classify the environmental impacts measured by the measuring means (10 to 21) into the direct environmental impacts and the indirect environmental impacts and register the direct environmental impacts and the indirect environmental impacts in a database (31c), that the proportional division means (7a to 7c, 9a to 9c, 31b) should proportionally distribute the indirect environmental impacts to the environmental impacts associated with the predetermined type of products based (31c) on a first predetermined parameter registered in the database, and that the distribution means (22, 31b) should distribute the direct environmental impacts and the indirect environmental impacts proportionally distributed by the proportional division means (7a to 7c, 9a to 9c, 31b) to the environmental impacts of one product based on a second predetermined parameter registered in the database (31c).

It is preferable that the measuring means (10 to 21), the classification means (31b), the proportional division means (7a to 7c, 9a to 9c, 31b) and the distribution means (22, 31b) should be connected to the database (31c).

The object and other objects and advantages of the present invention will become more apparent upon reading of the following detailed description and the accompanying drawings in which:

Fig. 1 is an exemplary diagram showing factors that are concerned with environmental impacts according to a first embodiment of the present invention;

Fig. 2 is a structural diagram of an environmental impact calculation system according to the first embodiment of the present invention;

Fig. 3 is a structural diagram of an environmental impact database according to the first embodiment of the present invention;

Fig. 4 shows an example of registration of the environmental impact database according to the first embodiment of the present invention;

Fig. 5 shows an example of registration of the environmental impact database according to the first embodiment of the present invention;

Fig. 6 is an exemplary diagram showing environmental impacts per single PCB product according to the first embodiment of the present invention;

Fig. 7 is an exemplary diagram illustrating procedures of calculating the amount of electric energy used per single PCB product according to the first embodiment of the present invention;

Fig. 8 is a structural diagram of an environmental impact calculation system according to a second embodiment of the present invention;

Fig. 9 is a conceptual diagram showing classification of environmental impacts for each place of generation of the environmental impacts according to a second embodiment of the present invention;

Fig. 10 is a structural diagram of an environmental impact information database according to the second embodiment of the present invention;

Fig. 11 is an exemplary diagram showing the relationship among gasoline, light oil and the amount of discharge gas according to the second embodiment of the present invention;

Fig. 12 is a structural diagram of a maintenance information database according to the second embodiment of the present invention;

Fig. 13 is a structural diagram of a product database according to the second embodiment of the present invention;

Fig. 14 is a structural diagram of a personnel database according to the second embodiment of the present invention;

Fig. 15 is a structural diagram of an environmental impact calculation database according to the second embodiment of the present invention;

Fig. 16 shows an example of registration of the environmental impact calculation database according to the second embodiment of the present invention; and

Fig. 17 is an exemplary diagram showing environmental impacts of a product according to the second embodiment of the present invention.

A method and system for calculating environmental impacts of products will be described below with reference to the accompanying drawings.

(First Embodiment)

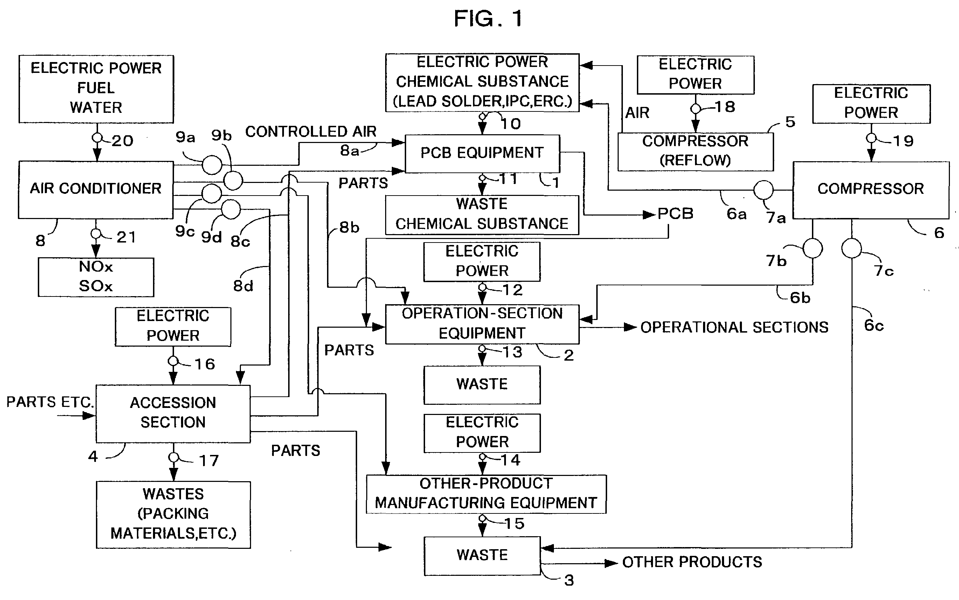

The description of the first embodiment will discuss a case where a method and system for calculating environmental impacts of products in the manufacturing process are used in a factory which has an equipment for manufacturing printed circuit boards (PCBs) and an equipment for manufacturing operational sections of OA machines. Fig. 1 is an exemplary diagram showing factors (electric power, air, raw materials, wastes and so forth) that are concerned with environmental impacts of products in the manufacturing process in a factory.

As shown in Fig. 1, the factory is equipped with three equipments, namely, a PCB equipment 1 which manufacture PCBs, an operation-section equipment 2 which assembles operational sections and an other-product manufacturing equipment 3 which manufactures other products. Those three (plural) equipments can be activated simultaneously to manufacture plural types of products at the same time.

The factory is further equipped with an accession section 4 that receives parts or the like from outside the factory, which are used in the equipments 1 to 3, a reflow compressor 5, a compressor 6 and an air conditioner 8.

The reflow compressor 5, which supplies compressed air into the PCB equipment 1, is connected to the PCB equipment 1 via a fluid path. The compressed air drives, for example, machines in the PCB equipment 1.

The compressor 6, which feeds air to the equipments 1 to 3, is connected to the equipments 1 to 3 via fluid paths 6a to 6c. Flowmeters 7a to 7c are respectively disposed in the fluid paths 6a to 6c to measure the amounts of air supplied to the equipments 1 to 3 from the compressor 6.

The air conditioner 8, connected to the equipments 1 to 3 and the accession section 4 via fluid paths 8a to 8d, feeds temperature controlled air (controlled air) into the equipments 1 to 3 and the accession section 4. Flowmeters 9a to 9d are respectively disposed in the fluid paths 8a to 8d to measure the amounts of controlled air supplied to the equipments 1 to 3 and the accession section 4.

The PCB equipment 1 is supplied with parts from the accession section 4, controlled air from the air conditioner 8, compressed air from the reflow compressor 5, air from the compressor 6, electric power, lead solder, and materials (chemical substances) such as IPA, and manufactures PCBs. The amount of electric energy, the amount of the lead solder and the amount of chemical substances, such as IPA, that are used in the PCB equipment 1 are measured by a measuring instrument 10. The measuring instrument 10 includes a watt-hour meter and a gravimeter. The weights, etc. of the wastes and chemical substances that are produced in the manufacture of the PCBs are measured by a measuring instrument 11 (which includes, for example, a gravimeter, a flowmeter and a densitometer in accordance with the wastes and chemical substances). The wastes and chemical substances are subjected to disposal or the like after undergoing a predetermined process.

The operation-section equipment 2 is supplied with parts from the accession section 4, the PCBs manufactured by the PCB equipment 1, controlled air from the air conditioner 8, air from the compressor 6 and electric power, and manufactures operational sections. The electric power used by the operation-section equipment 2 is measured by a watt-hour meter 12. The weight of the wastes that are produced in the manufacture of the operational sections is measured by, for example, a gravimeter 13. The wastes are disposed after undergoing a predetermined process.

The other-product manufacturing equipment 3 is supplied with parts from the accession section 4, controlled air from the air conditioner 8, air from the compressor 6 and electric power, and manufactures other types of products. The electric power used by the other-product manufacturing equipment 3 is measured by a watt-hour meter 14. The weight of the wastes that are produced in the manufacture of the other types of products is measured by, for example, a gravimeter 15. The wastes are disposed after undergoing a predetermined process.

The accession section 4 is supplied with parts or the like that are used in the equipments 1 to 3, controlled air from the air conditioner 8 and electric power, and supplies the parts to the equipments 1 to 3. The electric power used by the accession section 4 is measured by a watt-hour meter 16. The weight of the wastes, such as packing members for the parts, is measured by, for example, a gravimeter 17. The wastes are disposed after undergoing a predetermined process. The number of parts to be supplied to the equipments 1 to 3 is grasped by a production management system 22 which will be discussed later.

As electric power is supplied to the reflow compressor 5, the compressor 5 is driven to feed compressed air to the PCB equipment 1. The electric power used by the reflow compressor 5 is measured by a watt-hour meter 18.

As electric power is supplied to the compressor 6, the compressor 6 is driven to feed air to the equipments 1 to 3. The electric power used by the compressor 6 is measured by a watt-hour meter 19.

As electric power, fuel and water are supplied to the air conditioner 8, the air conditioner 8 is driven to feed controlled air to the equipments 1 to 3 and the accession section 4. The amounts of the electric power, fuel and water used by the air conditioner 8 are measured by a measuring instrument 20. The measuring instrument 20 includes a watt-hour meter, a gravimeter and a flowmeter. The amounts of atmospheric polluting substances, such as NOx and SOx, that are produced in the operation of the air conditioner 8 are measured by a measuring instrument 21 (which includes, for example, a gas flowmeter and a densitometer). The atmospheric polluting substances are emitted after undergoing a predetermined process.

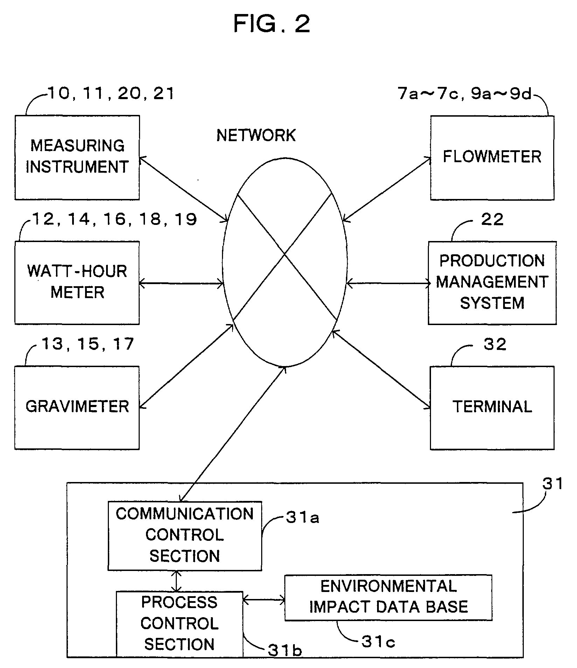

Fig. 2 is a structural diagram of an environmental impact calculation system according to the embodiment. As shown in Fig. 2, the environmental impact calculation system has the aforementioned measuring instruments (the measuring instruments 10, 11, 20, 21, the watt-hour meters 12, 14, 16, 18 and 19, and the gravimeters 13, 15 and 17) connected to a server 31 via a network.

The server 31 has a communication control section 31a, a process control section 31b and an environmental impact database 31c. The communication control section 31a communicates with the individual measuring instruments via the network under the control of the process control section 31b. The process control section 31b regularly registers measured data from the individual measuring instruments transmitted from the communication control section 31a into, for example, the environmental impact database 31c.

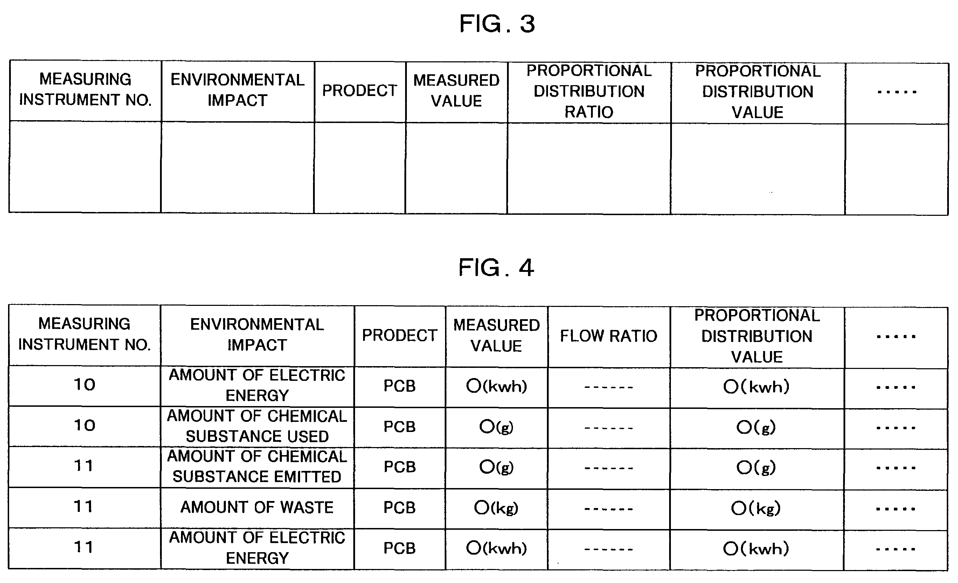

Fig. 3 shows the structure of the environmental impact database 31c. As shown in Fig. 3, the environmental impact database 31c includes items, such as a measuring instrument number, the types of environmental impacts, products to be used, a measured value, a proportional distribution ratio and a proportional distribution value. The process control section 31b registers the values or the like measured by the individual measuring instruments into the environmental impact database 31c.

The server 31 is connected to the production management system 22 via the network. The production management system 22 manages, for example, the number of parts supplied to the equipments 1 to 3 from the accession section 4.

The server 31 is further connected to a terminal 32 via the network. The terminal 32 is equipped with a browser which allows the terminal 32 to access to the server 31 via the network and input necessary information to the environmental impact database 31c.

The following discusses the environmental impact calculation method that uses the environmental impact calculation system with the above-described structure. In the description of the embodiment, a method of calculating environmental impacts of a single PCB product in the manufacturing process will be described. The calculation method calculates environmental impacts for a single PCB product in the manufacturing process by measuring environmental impacts associated with PCB products, proportionally distributing environmental impacts also associated with other types of products than the PCB products to the environmental impacts that are associated only with the PCB products and distributing the proportionally-distributed environmental impacts to the environmental impacts for a single PCB product.

First, a description will be given of the method of measuring and proportionally distributing environmental impacts associated with PCB products. The environmental impacts that are associated with PCB products can be classified into direct environmental impacts of PCB products (environmental impacts that are associated only with PCB products) and indirect environmental impacts of PCB products (environmental impacts also associated with other types of products than PCB products).

The direct environmental impacts of PCB products include the amount of electric energy used by the PCB equipment 1, the amount of chemical substances used by the PCB equipment 1, the amount of chemical substances emitted, the amount of wastes disposed from the PCB equipment 1 and the amount of electric energy used by the reflow compressor 5. Fig. 4 shows an example of registration of the environmental impact database 31c where direct environmental impacts of PCB products are registered.

The amount of electric energy used by the PCB equipment 1 is measured by the measuring instrument (watt-hour meter) 10. The amount of chemical substances used by the PCB equipment 1 is measured by the measuring instrument (gravimeter and flowmeter) 10. The amount of chemical substances emitted is measured by the measuring instrument (gravimeter, flowmeter and densitometer) 11. The amount of wastes disposed from the PCB equipment 1 is measured by the measuring instrument (gravimeter) 11. The amount of electric energy used by the reflow compressor 5 is measured by the watt-hour meter 18. The process control section 31b registers those measured values in the environmental impact database 31c. Because those environmental impacts are associated only with PCB products, the measured values become proportional distribution values directly as shown in Fig. 4.

The indirect environmental impacts of PCB products include the amount of electric energy used by the air conditioner 8, the amount of electric energy used by the compressor 6, the amount of electric energy used by the accession section 4, the amount of fuel and the amount of water that are used by the air conditioner 8, the amount of atmospheric polluting substances emitted from the air conditioner 8 and the amount of wastes disposed at the accession section 4.

The amount of electric energy used by the air conditioner 8 is measured by the measuring instrument (watt-hour meter) 20. The amount of electric energy used by the compressor 6 is measured by the watt-hour meter 19. The amount of electric energy used by the accession section 4 is measured by the watt-hour meter 16. The amount of fuel and the amount of water that are used by the air conditioner 8 are measured by the measuring instrument (flowmeter and densitometer) 20. The amount of atmospheric polluting substances emitted from the air conditioner 8 is measured by the measuring instrument (flowmeter and densitometer) 21. The amount of wastes disposed at the accession section 4 is measured by the gravimeter 17. The process control section 31b registers those measured values in the environmental impact database 31c.

As those indirect environmental impacts include environmental impacts also associated with other types of products than PCB products, such as operational sections and other products, the environmental impacts should be proportionally distributed, product type by product type, so that the values measured by the individual measuring instruments or the like are associated only with PCB products.

It is preferable to use, for example, the flow ratio of the fluid path 6a (the amount of flowing fluid path 6a/(the amount of total flowing fluid path 6a to 6c)) for the compressor 6 and the flow ratio of the fluid path 8a (the amount of flowing fluid path 8a/(the amount of total flowing fluid path 8a to 8d)) for the air conditioner 8, as a proportional distribution parameter. This is because the amounts of electric energy or the like that are used in the compressor 6 and the air conditioner 8 are approximately proportional to the amount of air or controlled air.

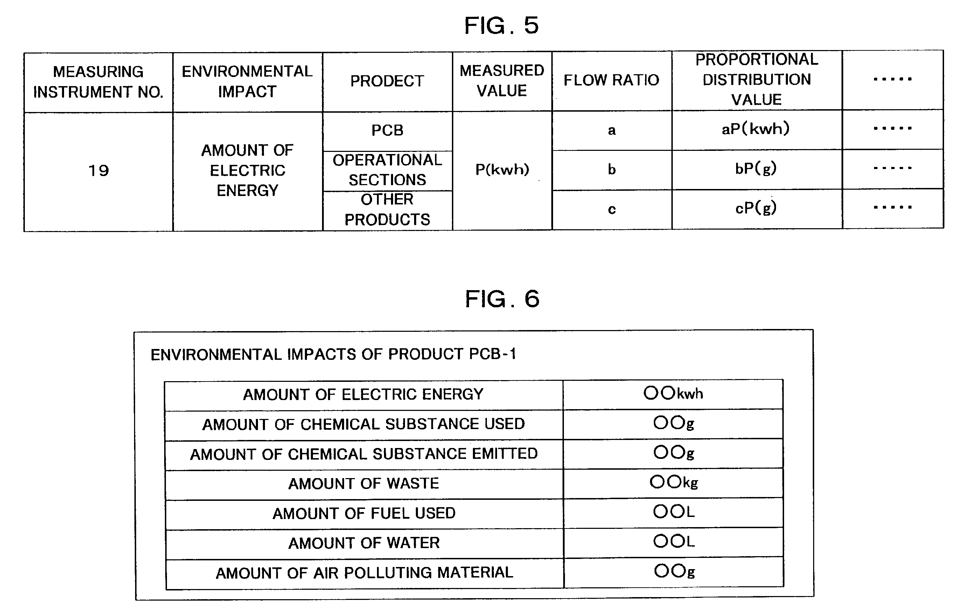

Fig. 5 shows an example of registration of the environmental impact database 31c for the amount of electric energy used in the compressor 6. In case where the amount of electric energy that is used by the compressor 6 and measured by the watt-hour meter 19 is P (kwh), the flow ratio of the fluid path 8a is a, the flow ratio of the fluid path 8b is b and the flow ratio of the fluid path 8c is c (a + b + c = 1), as shown in Fig. 5, the amount of electric energy that is used by the compressor 6 in association only with PCB products becomes equal to

$P \times a = aP$ (kwh).

With regard to the accession section 4, it is preferable to use, for example, the ratio of money for the parts of PCB products (money for the parts of PCB products/(money for all the parts of PCB products, operational sections and other products)).

As apparent from the above, the values of indirect environmental impacts associated with plural types of products can be proportionally distributed by multiplying values measured by the individual measuring instruments or the like by a predetermined parameter. It is therefore possible to proportionally distribute indirect environmental impacts to environmental impacts associated only with a predetermined type of products and thus calculate very reliable values for the environmental impacts of products. The environmental impacts of PCB products are acquired by adding proportionally distributed environmental impacts to the direct environmental impacts.

A description will now be given of a method of distributing environmental impacts to environmental impacts for a single PCB product. It is preferable to calculate environmental impacts for a single PCB product by, for example, the number of parts (the number of resistors, capacitors, etc.) used in the PCB product. This is because the environmental impacts, such as electric energy, are approximately proportional to the number of parts of PCB. In case of a product named "PCB-1", environmental impacts for a single "PCB-1" are expressed by the following equation:

environmental impacts for single "PCB-1"

= (environmental impacts of PCB product) $\times$

parts quantity ratio

where the parts quantity ratio is (the number of parts of single "PCB-1"/(the total number of parts of PCBs). The total number of parts of PCBs is the sum of values each obtained by multiplying the number of parts of each type of PCB by the production quantity thereof (i.e., the number of parts of "PCB-1" $\times$ the production quantity of "PCB-1" + the number of parts of "PCB-2" $\times$ the production quantity of "PCB-2" + ...). By distributing environmental impacts of PCB products by the parts quantity ratio per single PCB product, therefore, therefore, environmental impacts for a single PCB product in the manufacturing process can be calculated.

The environmental impacts of "PCB-1" acquired through the above calculation are shown in Fig. 6. As shown in Fig. 6, the environmental impacts of "PCB-1" include the amount of electric energy, the amount of chemical substances used, the amount of chemical substances emitted, the amount of wastes, the amount of fuel used, the amount of water and the amount of atmospheric polluting substances. Of those environmental impacts, a part of the amount of electric energy, the amount of wastes, the amount of chemical substances used and the amount of chemical substances emitted are values directly measured by the measuring instruments 10 and 11, while a part of the amount of electric energy, the amount of fuel used, the amount of water and the amount of atmospheric polluting substances are values obtained by proportionally distributing their respective values measured by the respective measuring instruments.

Compiling statistics on those calculated environmental impacts can clarify environmental impacts for each type of products and each production line. This can contribute to development of products that can reduce environmental impacts.

As examples of a method of calculating environmental impacts of a single PCB product in the manufacturing process, how to calculate the amount of electric energy per single PCB product and the discharge amount of NOx per single PCB product will be discussed below.

(Amount of electric energy per single PCB product)

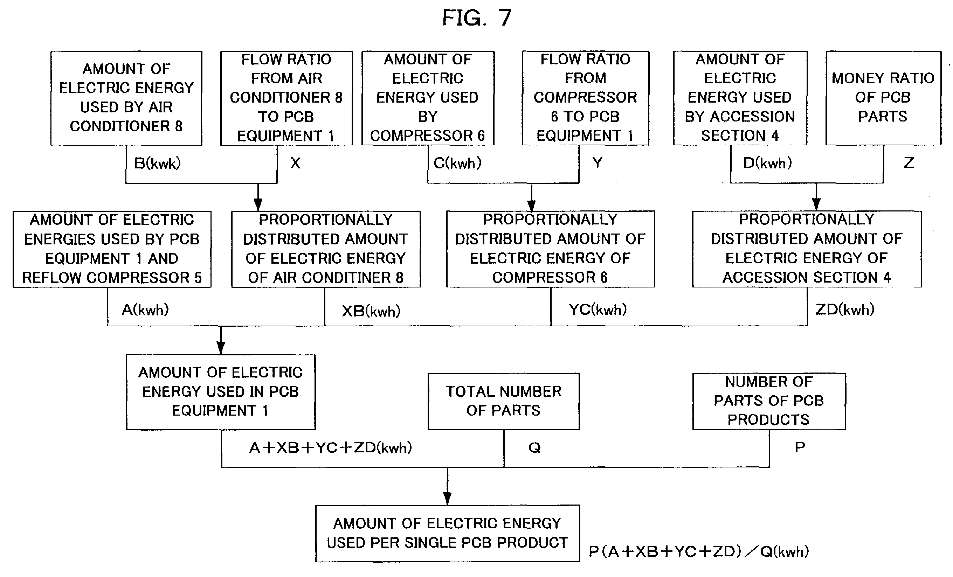

Fig. 7 exemplary diagram illustrates procedures of calculating the amount of electric energy used per single PCB product. The electric energies that are used in association with the manufacture of PCB products include the electric energies used by the PCB equipment 1 and the reflow compressor 5, electric energy used by the air conditioner 8, electric energy used by the compressor 6 and electric energy used by the accession section 4. Of those electric energies, the direct electric energies (those used only in manufacturing PCB products) are the electric energies used by the PCB equipment 1 and the reflow compressor 5. The electric energies used by the PCB equipment 1 and the reflow compressor 5 are measured by the measuring instrument 10 and the watt-hour meter 18 and total A (kwh), as shown in Fig. 7.

The indirect electric energies (those also used in manufacturing other types of products than the PCB products) include the electric energy used by the air conditioner 8, electric energy used by the compressor 6 and electric energy used by the accession section 4. The amounts of those electric energies used are measured by the watt-hour meters 20, 19 and 16, respectively. As shown in Fig. 7, the electric energy used by the air conditioner 8 is B (kwh), the electric energy used by the compressor 6 is C (kwh) and the electric energy used by the accession section 4 is D (kwh).

The flow ratio of the fluid path 8a (flow ratio from air conditioner 8 to PCB equipment 1) and the flow ratio of the fluid path 6a (flow ratio from compressor 6 to PCB equipment 1) measured the flowmeter 9a and flowmeter 7a to proportionally distribute the indirect amounts of electric energies were X and Y, respectively. The money ratio of the parts of PCB products obtained was Z. Therefore, the electric energy used by the air conditioner 8 becomes XB (kwh), the electric energy used by the compressor 6 becomes YC (kwh) and the electric energy used by the accession section 4 becomes ZD (kwh). The amount of the electric energy used in manufacturing PCB products therefore becomes A + XB + YC + ZD (kwh).

Next, the number of parts of a single PCB product and the total number of parts of PCB products were P and Q, respectively. Therefore, the amount of the electric energy used in manufacturing a single PCB product is calculated to be P(A + XB + YC + ZD)/Q (kwh).

(Amount of NOx emitted per single PCB product)

Next, the amount of NOx emitted per single PCB product is calculated. NOx is emitted through the air conditioner 8. The amount of NOx emitted from the air conditioner 8 is measured by the measuring instrument 21. The measuring instrument 21 is equipped with a gas flowmeter and a densitometer. The emitted amount of NOx is RS which is the value R measured by the gas flowmeter multiplied by the value S measured by the densitometer. The emitted amount of NOx that is associated with PCB products becomes XRS is the former emitted amount of NOx multiplied by the flow ratio X of the fluid path 8a. Accordingly, the amount of NOx emitted per single PCB product is calculated to be PXRS/Q.

According to the embodiment, as described above, indirect environmental impacts associated with plural types of products can be proportionally distributed environmental impact associated with a predetermined type of products, making it possible to calculate very reliable values for the environmental impacts of products.

According to the embodiment, as the flowmeters 7a to 7c are disposed in the fluid paths 6a to 6c and the flowmeters 9a to 9d are disposed in the fluid paths 8a to 8d, the amounts of electric energies used by the compressor 6 and the air conditioner 8 can be calculated in terms of the amounts of electric energies used only in manufacturing PCB products and the operational sections.

(Second Embodiment)

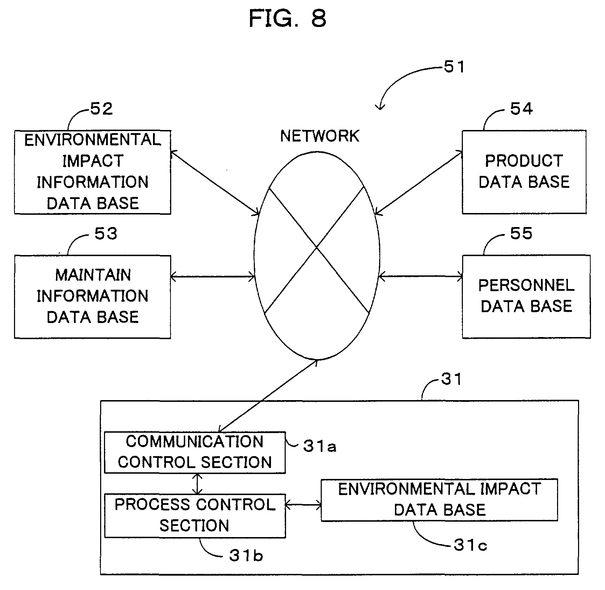

The description of the second embodiment will discuss a method and system for calculating environmental impacts of products in the maintenance process. Fig. 8 is a structural diagram showing the structure of an environmental impact calculation system 51 according to the second embodiment.

As shown in Fig. 8, the environmental impact calculation system 51 according to the embodiment comprises an environmental impact information database 52, a maintenance information database 53, a product database 54 and a personnel database 55, which are connected to a server 31 similar to the one in the first embodiment via a network.

Not shown terminals are connected to the respective databases 52 to 55 so that necessary information can be input to the databases 52 to 55. Each terminal is equipped with a browser which allows the terminal to access to the server 31 via the network to see information (output) gathered in the environmental impact database 31c as needed.

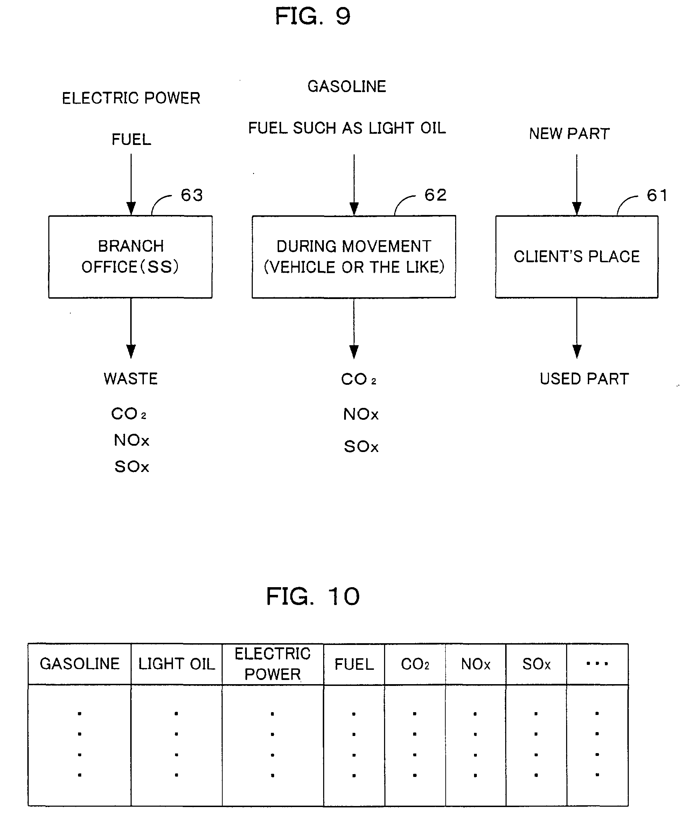

The following discusses environmental impacts produced in the maintenance process. Fig. 9 is a conceptual diagram showing classification of environmental impacts produced in the maintenance process for each place of generation of the environmental impacts. In the maintenance process, environmental impacts are produced at a client's place 61 which maintains products, during movement 62 from a branch office (service station) 63 to the client's place 61 by a vehicle or the like and the branch office (service station) 63 at which the maintenance work is prepared.

As shown in Fig. 9, new parts that are involved in parts replacement are used and replaced parts are collected at the client's place 61. During movement (vehicle or the like) 62, the vehicle uses fuel, such as gasoline, light oil, natural gas, LPG or electricity, and emits gas, such as $CO_2$, NOx or SOx. The branch office (service station) 63 uses an electric energy, fuel (e.g., kerosene used in the air conditioner or the like), etc. and emits a waste and $CO_2$, NOx, SOx or the like. Of the environmental impacts, the new parts that are used at the client's place 61 and replaced parts are direct environmental impacts and the environmental impacts that are used and emitted during movement 62 and at the branch office (service station) 63 are indirect environmental impacts. Information on the indirect environmental impacts in the maintenance process is registered in the environmental impact information database 52.

Works other than the maintenance, such as business, are carried out at the branch office (service station) 63 and the aforementioned environmental impacts include environmental impacts associated with a business process in addition to environmental impacts associated with the maintenance process. Therefore, the environmental impacts that are used and emitted during movement 62 and at the branch office (service station) 63 also include the environmental impacts associated with the business process.

The environmental impact information database 52 is a database to register environmental impact information of each branch office. Fig. 10 shows the structure of the environmental impact information database 52. As shown in Fig. 10, the environmental impact information database 52 includes items, such as gasoline, light oil (fuel of a vehicle), electric energy, fuel (fuel in the branch office), and emits gas, such as $CO_2$, NOx, SOx, the amount of wastes (the amount of buried wastes), the amount of wastes (the amount of incinerated wastes) and the recyclable amount.

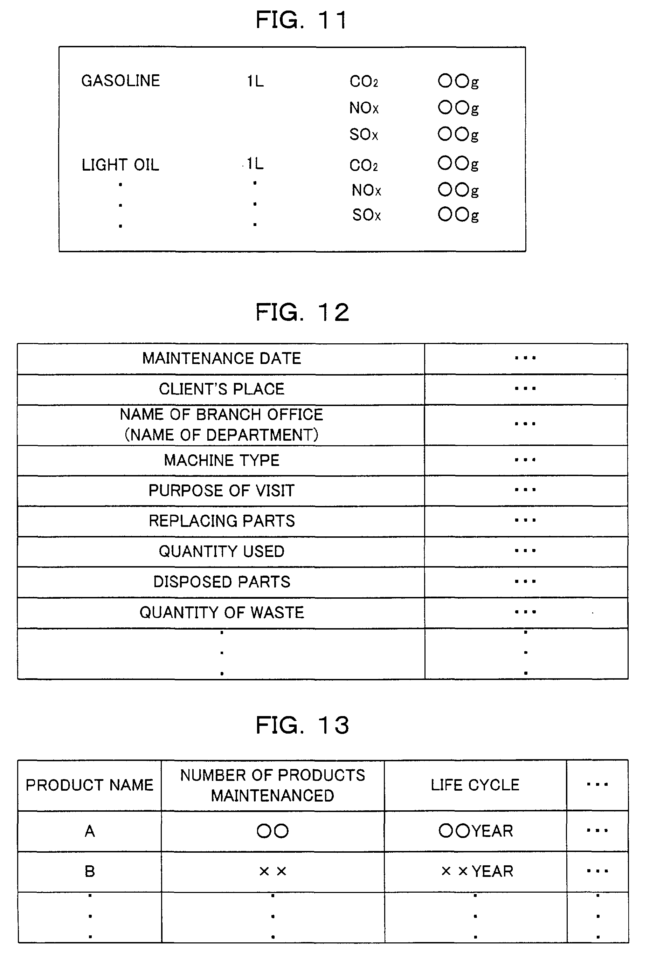

A person in charge makes inputs to the environmental impact information database 52, such as gasoline and light oil used in a month, the fuel for a vehicle, used the type of fuel and used the amount of the fuel, through the not shown terminal. Values that are calculated in accordance with the amounts of gasoline, light oil, electric energy, kerosene and so forth are automatically input as the amounts of $CO_2$, NOx and SOx emissions. For example, the emitted amounts of $CO_2$, NOx and SOx according to the types of fuels used are determined beforehand in such a way that $\bigcirc\bigcirc$ g of $CO_2$, XX g of NOx and $\bigcirc\bigcirc$ g of SOx are generated as one litter of gasoline is used, as shown in Fig. 11. Inputting the amounts of gasoline, light oil, kerosene and so forth automatically inputs the emitted amounts of $CO_2$, NOx and SOx that are calculated in accordance with the former amounts used.

The maintenance information database 53 is where a person who has done a maintenance work registers the contents of that work. Fig. 12 shows the structure of the maintenance information database 53. As shown in Fig. 12, the maintenance information database 53 includes items, such as the maintenance date, client's place, the name of a branch office (the name of a department), the machine type, the purpose of visit (regular inspection, failure or other maintenances), replacing parts (parts, units, expendables or other), the quantity used, the disposed parts (including information of parts that have been disposed unused due to the expiration of the period of guarantee) and the quantity of the waste.

The person who has done a maintenance work registers the contents of that work into the maintenance information database 53 in accordance with the items of the database 53 through the not shown terminal. Of the items of the maintenance information database 53, information associated with environmental impacts are the replacing parts, the quantity used, the disposed parts and the quantity of the waste, which are information on direct environmental impacts.

For example, parts-used data, actual disposed-parts data and actual purpose-of-visit data can be created from the maintenance information database 53. The parts-used data indicates actual data of parts, for example, for each month, each department, each machine type, each purpose of visit, each replaced part and each quantity used. The actual disposed-parts data indicates disposed parts, for example, for each month, each department, each disposal type and each quantity disposed. The actual purpose-of-visit data indicates actual visiting records, for example, for each month, each department, each machine type and each purpose of visit, with the number of visits made. Those actual data can clearly indicate the contents of a maintenance work. For example, it is possible to specify how many times a maintenance work has been done for each machine type, so that the actual records on the maintenance works can be managed plainly.

The product database 54 indicates the characteristics of products that are to be handled in the maintenance process. Fig. 13 shows the structure of the product database 54. As shown in Fig. 13, the product database 54 includes items, such as the product name, the quantity of products undergone maintenance and the life cycle of each type of products. Every time the quantity of products undergone maintenance changes or a product is added, the person in charge in a branch office makes inputs to the product database 54 through the not shown terminal. The life cycle of each type of products is specific to that type, and is automatically entered by inputting the product name. It is also possible to acquire the quantity of products undergone maintenance and automatically input that quantity.

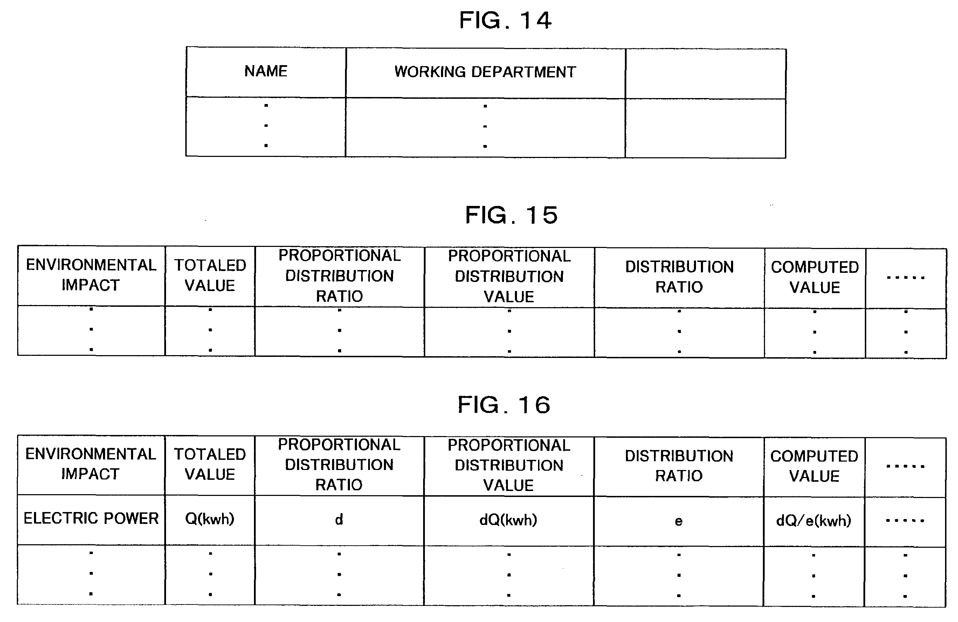

The personnel database 55 is a database where information of employees working at a branch office is registered. Fig. 14 shows the structure of the personnel database 55. As shown in Fig. 14, the personnel database 55 includes items, such as the name of each employee and a working department (including the work type, such as business or maintenance). In case where a predetermined branch office does a business other than the maintenance work, for example, the number of employees in all the employees in the branch office who are involved in the maintenance work can be specified using the personnel database 55.

Every time a personnel change is made, the person in charge makes inputs to the personnel database 55 through the not shown terminal. In case where a personnel database has already been created in the personnel department or the like, the personnel database 55 need not be created newly and the personnel database created in the personnel department or the like can be used. In this case, the personnel database in the personnel department or the like should be connected to the server 31 via the network.

The server 31 has a communication control section 31a, a process control section 31b and an environmental impact database 31c. The communication control section 31a communicates with the individual databases 52 to 55 via the network under the control of the process control section 31b. The process control section 31b regularly registers measured data in the individual databases 52 to 55 transmitted from the communication control section 3 1a into the environmental impact database 31c.

The environmental impact database 31c is a database where data necessary to calculate environmental impacts that are collected from the databases 52 to 55 are registered. Fig. 15 shows the structure of the environmental impact database 31c. As shown in Fig. 15, the environmental impact database 31c includes items, such as the type of an environmental impact, the totaled value, the proportional distribution ratio, the proportional distribution value, the distribution ratio and the calculated value. The totaled value is the sum of the values of those of the environmental impacts registered in the environmental impact information database 52 and the maintenance information database 53 which are needed. The proportional distribution ratio is a parameter for distributing those of the added-up environmental impacts which are associated with plural types of products to values equivalent to the environmental impacts associated with one type of products. The proportional distribution value is a value obtained by multiplying the totaled value by the proportional distribution ratio to provide the environmental impacts associated with one type of products. The distribution ratio is a parameter for distributing the environmental impacts associated with one type of products to environmental impacts associated with one product. The calculated value is the value of each environmental impact of one product that is calculated through the aforementioned calculation.

The following discusses a method of calculating environmental impacts of products in the maintenance process by using the environmental impact calculation system with the above-described structure. According to the calculation system, after environmental impacts associated with plural types of products are added up, they are proportionally distributed to environmental impact associated with a predetermined type of products and then distribution for each product is carried out to calculate the environmental impacts of one product.

First, after the maintenance work is executed, the person in charge inputs to the necessary items associated with environmental impacts, i.e. the replacing parts, the quantity used, the disposed parts and the quantity of the waste into the maintenance information database 53 using the not shown terminal. At the time the contents of the maintenance work are registered, as mentioned above, the date, the name of the maintenance department, etc. are input at the same time. As environmental impacts related data about the replacing parts, the quantity used, the disposed parts and the quantity of the waste are registered in the maintenance information database 53, the process control section 31b registers those data in the environmental impact database 31c. Those environmental impacts are direct environmental impacts and the totaled value thereof directly becomes the proportional distribution value.

Next, a predetermined person in charge in a branch office inputs to the amount of vehicular fuel used in one month (the amount of gasoline, light oil or the like used), the amount of electric energy used in the branch office, the amount of fuel used in the branch office (e.g., the amount of, for example, kerosene used) and so forth, once a month, using the not shown terminal. As the amount of fuel (gasoline, light oil, kerosene or the like) used is input, the amount of an emission, such as $CO_2$, NOx or SOx, is automatically entered. The weight of each of wastes into which life-oriented wastes, such as paper, bottles and cans, packing materials and so forth that are produced from the branch office in one month are classified are entered as the amount of wastes (the amount of buried wastes), the amount of wastes (the amount of incinerated wastes) and the recyclable amount. As those data are registered in the environmental impact information database 52, the process control section 31b registers those data in the environmental impact database 31c.

As one branch office is doing a work, such as business, other than the maintenance work, the environmental impacts registered in the environmental impact database 31c from the environmental impact information database 52 include environmental impacts associated with the business process in addition to environmental impacts associated with the maintenance process. It is therefore necessary to acquire environmental impacts associated only with the maintenance process among the environmental impacts that are produced from the branch office.

Of the environmental impacts that are produced from the branch office, the environmental impacts associated with the maintenance process should desirably be acquired by the ratio of maintenance personnel that is the ratio of persons in the branch office who provide the maintenance work to the total number of personnel in the branch office. This is because the values of the environmental impacts produced from an branch office are considered to be approximately proportional to the number of personnel in the branch office. Specifically, in case where there are ten personnel in branch office A, six doing business works while four are doing the maintenance work, 40% of the environmental impacts in the branch office A become environmental impacts associated with the maintenance process. The maintenance work personnel in the branch office and the total number of personnel in the branch office are registered in the personnel database 55 and the process control section 31b registers those data in the environmental impact database 31c.

Because the environmental impacts that are registered in the environmental impact database 31c from the environmental impact information database 52 are environmental impacts associated with plural types of products that have been subjected to a maintenance work in one month, the environmental impacts should be proportionally distributed to each predetermined type of products so that the environmental impacts become environmental impact associated with that predetermined type of products.

It is preferable to acquire a parameter for this proportional distribution in terms of, for example, the ratio of the number of maintenance works (the number of visits) for a predetermined type of products to the number of maintenance works for all products. This is because the values of indirect environmental impacts are considered to be approximately proportional to the number of maintenance works. Specifically, in case where there are three types of products to undergo a maintenance work, products A, products B and products C, the number of maintenance works for the products A in one month is 180, the number of maintenance works for the products B in one month is 80 and the number of maintenance works for the products C in one month is 300, 60% of the environmental impacts associated with the maintenance process become environmental impacts associated with the products A. The number of maintenance works for a predetermined type of products and the number of maintenance works for all the products are registered in the actual purpose-of-visit data created from the maintenance information database 53, and the process control section 31b registers those data in the environmental impact database 31c.

In case where the proportional distribution ratio for a predetermined type of products is d for the amount of electric energy Q (kwh) associated with the maintenance process among the amount of electric energy used in the branch office 63 , the proportional distribution value concerning a predetermined type of products becomes $Q \times d = dQ$ (kwh), as shown in Fig.16. This value dQ (kwh) is the amount of electric energy associated with a predetermined type of products among the environmental impacts associated with plural types of products. The sum of the direct environmental impacts and the proportionally distributed indirect environmental impacts is the number of environmental impacts associated with a predetermined type of products.

The values of the indirect environmental impacts can be proportionally distributed by multiplying the indirect environmental impacts by a predetermined parameter. This can allow the indirect environmental impacts to be environmental impacts associated with a predetermined type of products and makes it possible to calculate very reliable values for environmental impacts of products.

A method of distributing environmental impacts of one type of products to environmental impacts of single product will be described below. It is desirable to carry out the distribution of environmental impacts by dividing, for example, environmental impacts of a predetermined type of products by the number of those products. When the distribution ratio (the number of products) is e, for example, the calculated value for the amount of electric energy for one product becomes dQ/e (kwh), as shown in Fig. 16.

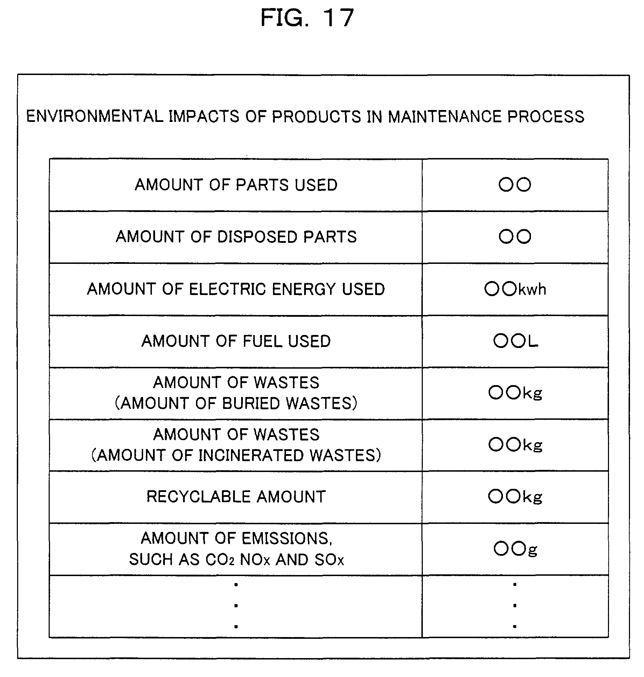

Fig. 17 exemplifies environmental impacts of a product in the maintenance process that is acquired through the above calculation. As shown in Fig. 17, the environmental impacts of a product include the amount of new parts (parts in use), the amount of disposed parts, the amount of electric energy used, the amount of fuel used, the amount of wastes (the amount of buried wastes), the amount of wastes (the amount of incinerated wastes), the recyclable amount, and the amount of emissions, such as $CO_2$, NOx and SOx. Of those environmental impacts, the amount of parts in use and the amount of disposed parts are calculated values obtained by distributing the totaled value registered directly in the maintenance information database 53. The amount of electric energy used, the amount of fuel used, the amount of wastes (the amount of buried wastes), the amount of wastes (the amount of incinerated wastes), the recyclable amount, and the amount of emissions, such as $CO_2$, NOx and SOx, are calculated values obtained by proportionally distributing and distributing the totaled value registered directly in the environmental impact information database 52.

By compiling statistics on those calculated environmental impacts, environmental impacts for each type of products can be made clear. For example, it is possible to acquire the amounts of the individual materials contained, such as ○○ kg of metal, ○○ kg of glass, ○○ kg of plastic rubber, ○○ kg of other materials and ○○ kg of substances to be subjected to PRTR (Pollutant Release and Transfer Register), from the amount of parts in use and the amount of disposed parts and calculate more detailed environmental impacts of products.

In case where the life cycle of the products is five years (60 months), for example, the values obtained by multiplying the calculated environmental impacts of the products by 60 become the environmental impacts of one product in the entire maintenance process. The life cycle of the products is registered in the product database 54 and the process control section 31b registers those data in the environmental impact database 31c. As environmental impacts are obtained for each product, they can be easily compared with environmental impacts in the entire maintenance process. This can contribute to development of products that can reduce environmental impacts.

The use of various parameters can allow environmental impacts of products to be managed in various ways and can thus contribute to development of products that can reduce environmental impacts.

According to the embodiment, as described above, indirect environmental impacts associated with plural types of products can be proportionally distributed environmental impact associated with a predetermined type of products by using a predetermined parameter so that very reliable values can be calculated for environmental impacts of products in the maintenance process.

The invention is not limited to the above-described embodiments, but may be modified and adopted in various other forms. The following discusses modifications of the embodiments to which the invention is adaptable.

The foregoing description of the embodiments, for example, the first embodiment, has been given of the case where the individual measuring instruments 10 to 21, the flowmeters 7a to 7c and 9a to 9d and the production management system 22 are connected to the server 31 via the network and the process control section 31b periodically registers environmental impact data in the environmental impact database 31c. But, the environmental impact calculation system of the invention has only to be able to calculate environmental impact of a predetermined type of products from the measured environmental impacts. For example, a worker in a factory may add up the environmental impacts measured by the individual measuring instruments and register the totaled values in the environmental impact database 31c using the terminal 32.

Although the foregoing description of the embodiments of the invention, for example, the first embodiment, has been given of the case where the indirect environmental impacts are proportionally distributed using the flow ratio, the environmental impact calculation system should only be designed to proportionally distribute indirect environmental impacts to environmental impacts that are used for a predetermined type of products and another proportional distribution parameter may be used as well.

In case where plural production lines for manufacturing different products are provided in the same factory in the first embodiment, it is preferable to select the proportional distribution parameters in accordance with the types of products manufactured. When similar products are manufactured, for example, it is preferable to use the production ratio of products as a proportional distribution parameter for indirect environmental impacts, such as the amount of electric energy and the amount of water used in the air conditioner 8 that feeds controlled air to the entire facility. This is because there is not significant difference in products. When products which significantly differ in manufacturing process are manufactured, it is preferable to use the ratio of the floor area of the manufacturing equipment to the floor area of the entire facility as a proportional distribution parameter, proportional distribution can be carried out irrespective of the types of products. Another reason is that the proportional distribution parameter, if related to products, considerably varies depending on the types of products. To proportionally distribute environmental impacts of products this way, it is apparently preferable to select the optimal proportional distribution parameter in consideration of the types or the like of products to be manufactured.

Although the foregoing description of the first embodiment has been given of the case where the distribution of environmental impacts for each product is carried out to calculate environmental impacts of the product by using the parts quantity ratio, it is apparently preferable to select the optimal proportional distribution parameter in consideration of the types or the like of products. When products have almost the same sizes as in the case of operational sections, for example, in the first embodiment, environmental impacts of the product may be distributed by using the production ratio.

Although the foregoing description of the second embodiment has been given of the case where an branch office is doing a work other than the maintenance work, the branch office may do only the maintenance work. In this case, all the environmental impacts that are produced from the branch office become environmental impacts produced in the maintenance process.

In short, the invention can calculate very reliable values for environmental impacts of products.

## Claims

1. An environmental impact calculation method of calculating environmental impacts of one product from environmental impacts associated with a predetermined type of products, **characterized by** comprising:

   a measuring procedure of measuring said environmental impacts associated with said predetermined type of products;
   a classification procedure of classifying said environmental impacts measured in said measuring procedure into direct environmental impacts associated only with said predetermined type of products and indirect environmental impacts associated with plural types of products;
   a proportional division procedure of proportionally distributing said indirect environmental impacts classified in said classification procedure to said environmental impacts associated with said predetermined type of products; and
   a distribution procedure of distributing said direct environmental impacts and said indirect environmental impacts proportionally distributed in said proportional division procedure to said environmental impacts of one product.

2. The environmental impact calculation method according to claim 1, **characterized in that** said measuring procedure measures environmental impacts which are produced in at least one of a manufacturing process and a maintenance process for said predetermined type of products.

3. The environmental impact calculation method according to claim 1 or 2, **characterized in that** said measuring procedure measures said environmental impacts associated with said predetermined type of products by using measuring instruments corresponding to types of said environmental impacts.

4. The environmental impact calculation method according to any one of claims 1 to 3, **characterized in that** said proportional division procedure proportionally distributes said indirect environmental impacts to said environmental impacts associated with said predetermined type of products based on a predetermined parameter.

5. The environmental impact calculation method according to claim 4, **characterized in that** said indirect environmental impacts are environmental impacts which are produced as a fluid is supplied to a plurality of manufacturing equipments, and
   a flow ratio of said fluid is used as said predetermined parameter.

6. The environmental impact calculation method according to any one of claims 1 to 5, **characterized in that** said distribution procedure distributes said proportionally-distributed indirect environmental impacts to said environmental impacts of one product based on a predetermined parameter according to a type of said one product.

7. The environmental impact calculation method according to claim 6, **characterized in that** said predetermined type of products are printed circuit boards, and
   a ratio of a number of parts of said printed circuit boards is used as said predetermined parameter.

8. The environmental impact calculation method according to any one of claims 1 to 7, **characterized in that** said classification procedure classifies said environmental impacts measured in said measuring procedure into said direct environmental impacts and said indirect environmental impacts and registers said direct environmental impacts and said indirect environmental impacts in a database,

   said proportional division procedure proportionally distributes said indirect environmental impacts to said environmental impacts associated with said predetermined type of products based on a first predetermined parameter registered in said database, and
   said distribution procedure distributes said direct environmental impacts and said indirect environmental impacts proportionally distributed in said proportional division procedure to said environmental impacts of one product based on a second predetermined parameter registered in said database.

9. An environmental impact calculation system for calculating environmental impacts of one product from environmental impacts associated with a predetermined type of products, **characterized by** comprising:

   measuring means (10 to 21) for measuring said environmental impacts associated with said predetermined type of products;
   classification means (31b) for classifying said environmental impacts measured by said measuring means (10 to 21) into direct environmental impacts associated only with said predetermined type of products and indirect environmental impacts associated with plural types of products;

proportional division means (7a to 7c, 9a to 9c, 31b) for proportionally distributing said indirect environmental impacts classified by said classification means (31b) to said environmental impacts associated with said predetermined type of products; and

distribution means (22, 31b) for distributing said direct environmental impacts and said indirect environmental impacts proportionally distributed by said proportional division means (7a to 7c, 9a to 9c, 31b) to said environmental impacts of one product.

10. The environmental impact calculation system according to claim 9, **characterized in that** said measuring means (10 to 21) measures environmental impacts which are produced in at least one of a manufacturing process and a maintenance process for said predetermined type of products.

11. The environmental impact calculation system according to claim 9 or 10, **characterized in that** said measuring means (10 to 21) is measuring instruments corresponding to types of said environmental impacts.

12. The environmental impact calculation system according to any one of claims 9 to 11, **characterized in that** said proportional division means (7a to 7c, 9a to 9c, 31b) proportionally distributes said indirect environmental impacts to said environmental impacts associated with said predetermined type of products based on a predetermined parameter.

13. The environmental impact calculation system according to claim 12, **characterized in that** said indirect environmental impacts are environmental impacts which are produced as a fluid is supplied to a plurality of manufacturing equipments, and

said predetermined parameter is a flow ratio of said fluid.

14. The environmental impact calculation system according to any one of claims 9 to 13, **characterized in that** said distribution means (22, 31b) distributes said proportionally distributed indirect environmental impacts to said environmental impacts of one product based on a predetermined parameter according to a type of said product.

15. The environmental impact calculation system according to claim 14, **characterized in that** said predetermined type of products are printed circuit boards, and

a ratio of a number of parts of each of said printed circuit boards is used as said predetermined parameter.

16. The environmental impact calculation system according to any one of claims 9 to 15, **characterized in that** said classification means (31b) classifies said environmental impacts measured by said measuring means (10 to 21) into said direct environmental impacts and said indirect environmental impacts and registers said direct environmental impacts and said indirect environmental impacts in a database (31c),

said proportional division means (7a to 7c, 9a to 9c, 31b) proportionally distributes said indirect environmental impacts to said environmental impacts associated with said predetermined type of products based (31c) on a first predetermined parameter registered in said database, and

said distribution means (22, 31b) distributes said direct environmental impacts and said indirect environmental impacts proportionally distributed by said proportional division means (7a to 7c, 9a to 9c, 31b) to said environmental impacts of one product based on a second predetermined parameter registered in said database (31c).

17. The system according to claim 16, **characterized in that** said measuring means (10 to 21), said classification means (31b), said proportional division means (7a to 7c, 9a to 9c, 31b) and said distribution means (22, 31b) are connected to said database (31c).

FIG. 1

ELECTRIC POWER — 19 → COMPRESSOR — 6

ELECTRIC POWER — 18 → COMPRESSOR (REFLOW) — 5

AIR

6a — 7a

7b — 6b

7c — 6c

OPERATIONAL SECTIONS

PCB

OTHER PRODUCTS

ELECTRIC POWER
CHEMICAL SUBSTANCE
(LEAD SOLDER, IPC, ETC.) — 10 → PCB EQUIPMENT — 1

WASTE CHEMICAL SUBSTANCE — 11

ELECTRIC POWER — 12 → OPERATION-SECTION EQUIPMENT — 2

WASTE — 13

ELECTRIC POWER — 14 → OTHER-PRODUCT MANUFACTURING EQUIPMENT

WASTE — 15

WASTE — 3

CONTROLLED AIR — 8a

PARTS

8b

PARTS

8c

8d

PARTS

9a  9b

9c  9d

ELECTRIC POWER — 16 → ACCESSION SECTION — 4

WASTES (PACKING MATERIALS, ETC.) — 17

ELECTRIC POWER
FUEL
WATER — 20 → AIR CONDITIONER — 8

NOx SOx — 21

PARTS ETC.

EP 1 197 895 A2

# FIG. 2

15

## FIG. 3

| MEASURING INSTRUMENT NO. | ENVIRONMENTAL IMPACT | PRODECT | MEASURED VALUE | PROPORTIONAL DISTRIBUTION RATIO | PROPORTIONAL DISTRIBUTION VALUE | ・・・・・ |
|---|---|---|---|---|---|---|
| | | | | | | |

## FIG. 4

| MEASURING INSTRUMENT NO. | ENVIRONMENTAL IMPACT | PRODECT | MEASURED VALUE | FLOW RATIO | PROPORTIONAL DISTRIBUTION VALUE | ・・・・・ |
|---|---|---|---|---|---|---|
| 10 | AMOUNT OF ELECTRIC ENERGY | PCB | ○(kwh) | ------ | ○(kwh) | ・・・・・ |
| 10 | AMOUNT OF CHEMICAL SUBSTANCE USED | PCB | ○(g) | ------ | ○(g) | ・・・・・ |
| 11 | AMOUNT OF CHEMICAL SUBSTANCE EMITTED | PCB | ○(g) | ------ | ○(g) | ・・・・・ |
| 11 | AMOUNT OF WASTE | PCB | ○(kg) | ------ | ○(kg) | ・・・・・ |
| 11 | AMOUNT OF ELECTRIC ENERGY | PCB | ○(kwh) | ------ | ○(kwh) | ・・・・・ |

## FIG. 5

| MEASURING INSTRUMENT NO. | ENVIRONMENTAL IMPACT | PRODECT | MEASURED VALUE | FLOW RATIO | PROPORTIONAL DISTRIBUTION VALUE | ····· |
|---|---|---|---|---|---|---|
| 19 | AMOUNT OF ELECTRIC ENERGY | PCB | P(kwh) | a | aP(kwh) | ····· |
| | | OPERATIONAL SECTIONS | | b | bP(g) | ····· |
| | | OTHER PRODUCTS | | c | cP(g) | ····· |

## FIG. 6

| ENVIRONMENTAL IMPACTS OF PRODUCT PCB-1 | |
|---|---|
| AMOUNT OF ELECTRIC ENERGY | ○○kwh |
| AMOUNT OF CHEMICAL SUBSTANCE USED | ○○g |
| AMOUNT OF CHEMICAL SUBSTANCE EMITTED | ○○g |
| AMOUNT OF WASTE | ○○kg |
| AMOUNT OF FUEL USED | ○○L |
| AMOUNT OF WATER | ○○L |
| AMOUNT OF AIR POLLUTING MATERIAL | ○○g |

EP 1 197 895 A2

FIG. 7

| | | | |
|---|---|---|---|
| AMOUNT OF ELECTRIC ENERGY USED BY AIR CONDITIONER 8  B(kwk) | FLOW RATIO FROM AIR CONDITIONER 8 TO PCB EQUIPMENT 1  X | AMOUNT OF ELECTRIC ENERGY USED BY COMPRESSOR 6  C(kwh) | FLOW RATIO FROM COMPRESSOR 6 TO PCB EQUIPMENT 1  Y |
| AMOUNT OF ELECTRIC ENERGY USED BY ACCESSION SECTION 4  D(kwh) | MONEY RATIO OF PCB PARTS  Z | | |

PROPORTIONALLY DISTRIBUTED AMOUNT OF ELECTRIC ENERGY OF AIR CONDITINER 8   XB(kwh)

PROPORTIONALLY DISTRIBUTED AMOUNT OF ELECTRIC ENERGY OF COMPRESSOR 6   YC(kwh)

PROPORTIONALLY DISTRIBUTED AMOUNT OF ELECTRIC ENERGY OF ACCESSION SECTION 4   ZD(kwh)

AMOUNT OF ELECTRIC ENERGIES USED BY PCB EQUIPMENT 1 AND REFLOW COMPRESSOR 5   A(kwh)

AMOUNT OF ELECTRIC ENERGY USED IN PCB EQUIPMENT 1   A+XB+YC+ZD(kwh)

TOTAL NUMBER OF PARTS   Q

NUMBER OF PARTS OF PCB PRODUCTS   P

AMOUNT OF ELECTRIC ENERGY USED PER SINGLE PCB PRODUCT   $P(A+XB+YC+ZD)/Q(kwh)$

# FIG. 8

# FIG. 9

ELECTRIC POWER

FUEL

↓ 63

BRANCH
OFFICE(SS)

↓

WASTE

$CO_2$

NOx

SOx

GASOLINE

FUEL SUCH AS LIGHT OIL

↓ 62

DURING MOVEMENT
(VEHICLE OR THE LIKE)

↓

$CO_2$

NOx

SOx

NEW PART

↓ 61

CLIENT'S PLACE

↓

USED PART

# FIG. 10

| GASOLINE | LIGHT OIL | ELECTRIC POWER | FUEL | $CO_2$ | NOx | SOx | ・・・ |
|---|---|---|---|---|---|---|---|
| · · · · | · · · · | · · · · | · · · · | · · · · | · · · · | · · · · | · · · · |

# FIG. 11

| GASOLINE | 1L | $CO_2$ | ○○g |
|---|---|---|---|
| | | NOx | ○○g |
| | | SOx | ○○g |
| LIGHT OIL | 1L | $CO_2$ | ○○g |
| . | . | NOx | ○○g |
| . | . | SOx | ○○g |
| . | . | | |

# FIG. 12

| MAINTENANCE DATE | • • • |
|---|---|
| CLIENT'S PLACE | • • • |
| NAME OF BRANCH OFFICE (NAME OF DEPARTMENT) | • • • |
| MACHINE TYPE | • • • |
| PURPOSE OF VISIT | • • • |
| REPLACING PARTS | • • • |
| QUANTITY USED | • • • |
| DISPOSED PARTS | • • • |
| QUANTITY OF WASTE | • • • |
| . | . |

# FIG. 13

| PRODUCT NAME | NUMBER OF PRODUCTS MAINTENANCED | LIFE CYCLE | • • • |
|---|---|---|---|
| A | ○○ | ○○YEAR | • • • |
| B | ×× | ××YEAR | • • • |
| . | . | . | . |

## FIG. 14

| NAME | WORKING DEPARTMENT |
|---|---|
| · · · | · · · |

## FIG. 15

| ENVIRONMENTAL IMPACT | TOTALED VALUE | PROPORTIONAL DISTRIBUTION RATIO | PROPORTIONAL DISTRIBUTION VALUE | DISTRIBUTION RATIO | COMPUTED VALUE |
|---|---|---|---|---|---|
| · · · | · · · | · · · | · · · | · · · | · · · |

## FIG. 16

| ENVIRONMENTAL IMPACT | TOTALED VALUE | PROPORTIONAL DISTRIBUTION RATIO | PROPORTIONAL DISTRIBUTION VALUE | DISTRIBUTION RATIO | COMPUTED VALUE |
|---|---|---|---|---|---|
| ELECTRIC POWER | Q(kwh) | d | dQ(kwh) | e | dQ/e(kwh) |
| · · · | · · · | · · · | · · · | · · · | · · · |

# FIG. 17

| ENVIRONMENTAL IMPACTS OF PRODUCTS IN MAINTENANCE PROCESS | |
|---|---|
| AMOUNT OF PARTS USED | ○○ |
| AMOUNT OF DISPOSED PARTS | ○○ |
| AMOUNT OF ELECTRIC ENERGY USED | ○○kwh |
| AMOUNT OF FUEL USED | ○○L |
| AMOUNT OF WASTES (AMOUNT OF BURIED WASTES) | ○○kg |
| AMOUNT OF WASTES (AMOUNT OF INCINERATED WASTES) | ○○kg |
| RECYCLABLE AMOUNT | ○○kg |
| AMOUNT OF EMISSIONS, SUCH AS $CO_2$ $NO_x$ AND $SO_x$ | ○○g |
| . . . | . . . |